# EUROPEAN PATENT APPLICATION

(11) **EP 2 800 046 A1**
(43) Date of publication of application: **05.11.2014**
(21) Application number: 12863761.8
(22) Date of filing: 27.11.2012
(51) Int. Cl.: G06Q 30/02

(54) **APPARATUS AND METHOD FOR PROVIDING AN ADVERTISEMENT BY USING AN INSTANT COUPON**

(30) Priority: 27.12.2011 KR 20110143020; 22.08.2012 KR 20120091591
(71) Applicant: Baek, Seung-Cheol, Incheon 405-785 (KR); Lee, Kee-Pum, Gyeonggi-do 445-897 (KR)
(72) Inventor: Baek, Seung-Cheol, Incheon 405-785 (KR); Lee, Kee-Pum, Gyeonggi-do 445-897 (KR)
(74) Representative: Verscht, Thomas Kurt Albert
(86) International application number: PCT/KR2012/010105
(87) International publication number: WO 2013/100395

(57) **Abstract**

The present invention relates to an advertisement providing apparatus, and in particular to an apparatus for providing an advertisement by using an instant coupon, which provides an advertisement corresponding to a winning ranking when a user confirms the winning ranking of an instant coupon number, and provides a free gift to the user who watches the advertisement until the end.

## Description

### Technical Field

The present invention relates, in general, to an apparatus and method for providing an advertisement and, more particularly, to an apparatus and method for providing an advertisement using an instant coupon, which is configured such that an instant coupon including an instant coupon number is provided so that a coupon user can confirm anywhere whether or not he or she has won a prize based on the instant coupon number recorded in the coupon which may include a winning number, an advertisement corresponding to a winning ranking is provided at the time of the winning ranking of the instant coupon number being determined, and the coupon user is notified with the winning ranking and a free gift is provided to the coupon user who watches the advertisement until the end.

### Background Art

In general, as a type of marketing, marketing using free gifts, which is carried out in such a manner that a company provides a free gift directly to a person who purchased a certain product of the company or provides an advertisement by inducing the person to connect to the company's website using various coupons for promoting purchase of the product to provide the free gift through confirming whether or not an inputted coupon number is a winning number, has been mainly applied. Typically, a free gift refers to a product at no cost or at a low price that is made available for a predetermined period to persons who purchased a certain product. Such a free gift is used as a means to construct a customer database and contributes to improvement of the image of a brand.

However, advertisement marketing that presents free gifts, gift cards, and complimentary tickets using coupons, and induces coupon users to connect to web-sites showing advertisement images and advertisement videos, rather than marketing that provides free gifts when customers purchase products, has been mainly used so as to achieve publicity effects, prompt the purchase of products, and collect customer information. Typically, on coupons for free gift presentation, coupon numbers are printed, and methods of presenting free gifts are mainly implemented as an unconditional presentation method of showing an advertisement for promoting a relevant company's product to a coupon user who accesses the corresponding site using a computer or the like, receiving the coupon number of a relevant coupon input by the coupon user, registering the coupon number, and then providing a free gift, and a winning method of providing a free gift only when an input coupon number is a winning coupon number.

The conventional methods of presenting free gifts using coupons as described above are inconvenient in that a coupon user must personally access the site of a company that provides the coupons using a computer, individually enter coupon numbers printed on the coupons, and then check whether or not he or she has a winning coupon number.

Furthermore, the conventional methods of presenting free gifts are problematic in that whether or not a coupon user has won a free gift can be confirmed regardless of whether or not he or she watched an advertisement because coupon numbers are published on a web-site, and thus efficiency of the advertisement is reduced because the coupon user does not usually watch the advertisement carefully.

### Disclosure

### Technical Problem

Accordingly, an object of the present invention is to provide an apparatus and method for providing an advertisement using an instant coupon, which is configured such that an instant coupon including an instant coupon number is provided so that a coupon user can confirm anywhere whether or not he or she has won a prize based on the instant coupon number recorded in the coupon which may include a winning number; an advertisement corresponding to a winning ranking is provided at the time of the winning ranking of the instant coupon number being determined; and the coupon user is notified with the winning ranking and a free gift is provided to the user who watches the advertisement until the end.

### Technical Solution

In order to accomplish the above object, the present invention provides an apparatus for providing an advertisement using an instant coupon according to a first exemplary embodiment of the present invention, the apparatus including: a winning confirmation unit for detecting coupon numbers and winning numbers from instant coupon information included in a coupon, calculating a winning group of the winning numbers based on the coupon numbers, calculating consistency between winning group numbers of the winning group and the coupon numbers, and determining and outputting winning rankings resulting from the consistency, wherein the instant coupon information includes: the winner numbers that fall within one group among winning reference number groups, each of which includes a plurality of groups, each of which is composed of plurality of numbers; and coupon numbers, each of which includes information on the winning group corresponding to the winning numbers among the groups, has digits of the same number as that of digits of the winning group of the winning numbers, and is composed of rows of the same number as that of rows of the winning group; a display unit for displaying the advertisement; an advertisement providing unit for enabling the advertisement to be displayed on the display unit to correspond to each of the winning rankings; and a control unit for controlling the advertisement providing unit to enable the advertisement corresponding to each of the winning rankings to be displayed on the display unit.

The winning confirmation unit may include: an instant coupon number recognizing part for recognizing the instant coupon information from the coupon and detecting and outputting the winning numbers and coupon numbers from the instant coupon information; a winning number generating part for outputting winning group numbers of a corresponding winning group by receiving information on the input coupon numbers and calculating the winning group; and a consistency calculating part for receiving information on the coupon numbers and the winning group numbers, calculating consistency between the coupon numbers and the winning group numbers, and thereafter, enabling the winning rankings resulting from the consistency to be outputted to the control unit.

A number of the groups may be four, and each of the groups may be composed of four digits.

The winning confirmation unit may determine the winning rankings according to whether numbers which are consistent with the winning group numbers of the winning numbers are present in how many row of the coupon numbers.

The winning confirmation unit may determine the winning rankings according to the number of consistent digits and the consistency of orders among digits of the winning group numbers of the winning numbers and digits of individual rows of the coupon numbers.

The advertisement providing unit may include: an advertisement storing part for storing at least one advertisement; and an advertisement outputting part for repeatedly outputting a random advertisement among the advertisements stored in the advertisement storing part through the display unit to correspond to the winning ranking.

The advertisement providing unit may include: a background advertisement image storing part for storing at least one background image; an advertisement object image storing part for storing advertisement object images more than a number of advertisement objects corresponding to each of the winning rankings; and an advertisement generating part for loading a random background advertisement image at the time of the winning rankings being determined and combining the advertisement object images corresponding to each of the winning rankings with the background advertisement images loaded from the advertisement object image storing unit to generates the advertisement.

In order to accomplish the above object, the present invention provides an apparatus for providing an advertisement using an instant coupon according to a second exemplary embodiment of the present invention, the apparatus including: a display unit for displaying an advertisement; a winning confirmation unit for detecting coupon numbers and winning numbers from instant coupon information included in a coupon, calculating a winning group of the winning numbers based on the coupon numbers, calculating consistency between winning group numbers of the winning group and the coupon numbers, and thereafter, determining and outputting winning rankings resulting from the consistency, wherein the instant coupon information includes: the winner numbers that fall in one group among winning reference number groups, each of which includes a plurality of groups, each of which is composed of plurality of numbers; and the coupon numbers, each of which includes information on the winning group corresponding to the winning numbers among the groups, has digits of the same number as that of digits of the winning group of the winning numbers, and is composed of rows of the same number as that of rows of the winning group; and an advertisement providing unit for receiving information on the input winning ranking and enabling the advertisement corresponding to each of the winning rankings to be output through the display unit.

The winning confirmation unit may include: an instant coupon number recognizing part for recognizing the instant coupon information from the coupon and detecting and outputting the winning numbers and coupon numbers from the instant coupon information; a winning number generating part for receiving information on the input coupon numbers and generating the winning numbers; a consistency calculating part for comparing the generated winning numbers and the coupon numbers to calculate consistency therebetween, determining winning rankings according to the consistency, and enabling the winning rankings to be outputted to the advertisement providing unit.

The advertisement providing unit may include: an advertisement storing part for storing various advertisements having winning ranking information; and an advertisement outputting part for loading an advertisement having the same winning ranking information as the winning rankings from the advertisement storing part and enabling the advertisement to be displayed through the display unit.

The advertisement providing unit may include: a background advertisement image storing part for storing background images of the advertisement; an advertisement object image storing part for storing object images for various objects to be combined with the background images of the advertisements; and an advertisement generating part for receiving information on the input winning ranking, loading object images and advertisement background images in numbers corresponding to each of the winning rankings, and combining the advertisement background images with the object images to generate an advertisement, thereby enabling the advertisements to be displayed on the display unit.

In order to accomplish the above object, the present invention provides a method for providing an advertisement using an instant coupon through the apparatus for providing an advertisement, the method including: a preparation process of driving an instant winning number recognizing unit according the request for confirmation of prize winning of a coupon; a recognition process of recognizing instant coupon numbers including; the winner numbers that fall in one group among winning reference number groups, each of which includes a plurality of groups, each of which is composed of plurality of numbers; and the coupon numbers, coupon numbers, each of which includes information on the winning group corresponding to the winning numbers among the groups, has digits of the same number as that of digits of the winning group of the winning numbers, and is composed of rows of the same number as that of rows of the winning group; a winning number obtaining process of obtaining winning numbers, which are winning group numbers, from the recognized instant coupon numbers; a winning ranking determining process of determining winning rankings corresponding to consistency calculated between the winning numbers and the coupon numbers; and an advertisement providing process of displaying an advertisement according to each of the winning rankings on a display unit.

The advertisement providing process may include: an advertisement loading step of loading a random advertisement at the time of the winning rankings being determined; and an advertisement providing step of repeatedly displaying the loaded advertisement to correspond to the winning ranking on the display unit.

The advertisement providing process may be characterized by loading the advertisement corresponding to each of the winning ranking from the advertisements stored to be mapped to the winning rankings and displaying the advertisements.

The advertisement providing process may include: an advertisement background image loading step of loading random advertisement background images at the time of the winning rankings being determined; an advertisement object image loading step of loading advertisement object images corresponding to a number of advertisement objects of each of the winning rankings; an advertisement generating step of generating an advertisement by combining the loaded advertisement object images with the loaded advertisement background images; and an advertisement providing step of displaying the generated advertisement on the display unit.

### Advantageous Effects

According to the present invention, it is advantageous in that a coupon user can immediately confirm whether or not he or she has won a free gift because an instant coupon number of an instant coupon is recognized through a mobile communication terminal, such as a smart phone, thereby enabling the user to enjoy him or herself and improve convenience and winning reliability of the user.

Also, the present invention is advantageous in that a coupon user's attention span to an advertisement can be improved because the advertisement is provided at the time of winning, whether or he or she wins a prize is confirmed after the advertisement has been displayed, and the user can know his or her winning ranking only when he or she watches the displayed advertisement until the end.

Furthermore, the present invention is advantageous in that a user's attention span to an advertisement can be improved because a free gift is provided after a coupon user has watched the advertisement until the end, and efficiency of the advertisement can be also improved because a user should watch the entire advertisement.

### Description of Drawings

FIG. 1 is a view showing the configuration of a system for providing an advertisement using an instant coupon according to a first exemplary embodiment of the present invention;
FIG. 2 is a view showing the configuration of an apparatus for providing an advertisement using an instant coupon according to a second exemplary embodiment of the present invention;
FIG. 3 is a view showing the configuration of an apparatus for providing an advertisement using an instant coupon according to a third exemplary embodiment of the present invention;
FIG. 4 is a view showing the configuration of an apparatus for providing an advertisement using an instant coupon according to a fourth exemplary embodiment of the present invention;
FIG. 5 is a view showing the configuration of an apparatus for providing an advertisement using an instant coupon according to a fifth exemplary embodiment of the present invention;
FIG. 6 is a flow chart showing a method for providing an advertisement using an instant coupon according to the present invention;
FIG. 7 is a view for explaining one example in which winning rankings are determined by calculating consistency of an instant coupon number according to the present invention; and
FIG. 8 is a view showing one example in which an advertisement is indicated according to each of winning rankings resulting from the calculation of consistency of the instant coupon number according to the present invention.

### Best Mode

Hereinbelow, a system for providing an advertisement using an instant coupon according to the present invention, the configurations and operations of an apparatus, and a method for providing an advertisement accordingly will be described in more detail with reference to the accompanying drawings.

The present invention relates to an apparatus and system, which is configured such that a coupon user can immediately confirm whether or not he or she has won an instant coupon number having a certain digit number including both a coupon number and a winning number, using only an advertisement providing apparatus, such as a mobile communication terminal of a smart phone and the like, and when an advertisement corresponding to a winning ranking is provided to the coupon user, the coupon user is notified with the winning ranking according to a number of advertisement objects in the advertisement, a number of repetitions of the advertisement, the number of advertisements, and a free gift corresponding to the winning ranking is then provided.

A system method of storing advertisements in a server of a remote place in order to reduce load in memory capacity and business affairs of an advertisement providing apparatus, such as the aforesaid mobile communication terminal and providing a relevant advertisement corresponding to a winning ranking at the time of a request from the advertisement providing apparatus, and a terminal method of enabling advertisements to be operated in one advertisement providing apparatus may be applied to the present invention.

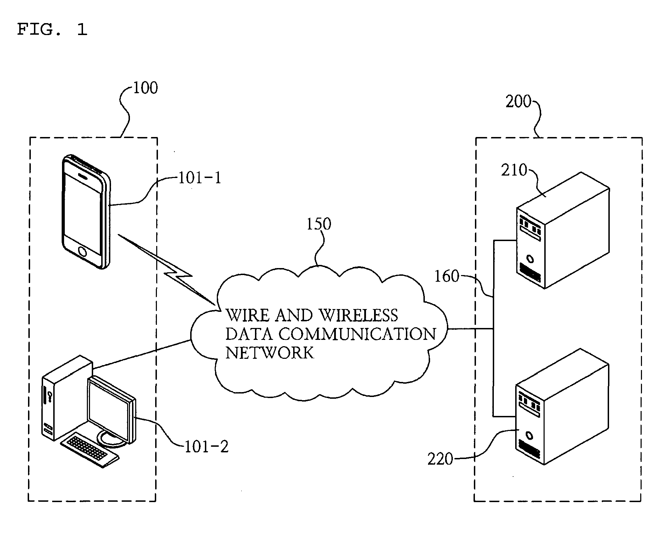

FIG. 1 is a view showing the configuration of a system for providing an advertisement with regard to a system method.

Referring to FIG. 1, a system for providing an advertisement using an instant coupon according to the present invention includes an advertisement providing apparatus 100 (or "an advertisement providing terminal") and an advertisement providing server unit 200.

The advertisement providing apparatus 100 and the advertisement providing server unit 200 are connected through a wire and wireless data communication network 150, or through the wire and wireless data communication network 150 and a local network 160.

The advertisement providing apparatus 100 may be a mobile communication terminal 101-1, such as a smart phone in which an application for providing an advertisement using an instant coupon is installed, a computer 101-2 or the like, and the advertisement providing apparatus 100 recognizes instant coupon information including coupon numbers and winning numbers from a coupon according to the present invention, detects the coupon numbers and the winning numbers from the recognized instant coupon information, calculates consistency between the coupon numbers and the winning numbers, and determines winning rankings according to the calculated consistency, thus transmitting ranking information to the advertisement providing server unit 200. The advertisement providing apparatus 100 displays advertisements according to winning rankings when the corresponding advertisement has been received in response to transmission of the winning ranking information so that a coupon user can watch the advertisement, and then provides a free gift corresponding to each of the winning rankings. Here, the free gift may be provided in the form of a mobile free gift or a physical free gift. Such a method for providing the free gift is the same as the conventional method, and accordingly, it should be noted that the detailed description thereon will be hereinafter omitted.

The winning numbers may be numbers which are pre-stored, or may be numbers which are created according to coupon numbers at the time of creating instant coupon numbers.

In the case of the former method, the advertisement providing apparatus 100 may be connected to the advertisement providing server 200 whenever winning numbers are updated to receive the winning numbers, or may receive and store the winning numbers in advance through updating of an application.

Also, in the case of the latter method, the winning numbers may be numbers which are created by coupon numbers at the time of creating the coupon numbers. Furthermore, as described above, when each of the instant coupon numbers is composed of winning reference numbers, each of which including winning numbers, and coupon numbers including information capable of extracting winning numbers from the winning reference numbers, and is configured such that the coupon numbers are created under participation of the winning reference numbers including the winning numbers, the winning numbers may be conversely numbers detected based on the coupon numbers from the winning reference numbers.

Explaining the latter method with an example, each of the coupon numbers shown in the instant coupon information (numbers) is composed of five rows, each of which being composed of four numbers, and each of the winning numbers is composed of five groups, each of which being composed of four numbers (here, the row and the group have the same meaning, and are used as different terms for division). The coupon numbers include information capable of judging winning groups of the winning numbers. That is, the winning group numbers of any group of the winning numbers are concerned in creating of the coupon numbers.

The advertisement providing server unit 200 stores various advertisements and includes a database (not drawn) in which each of the advertisements may be matched with each of the winning rankings.

The advertisement providing server unit 200 receives the winning rankings output from the advertisement providing apparatus 100, and provides an arbitrary advertisement recorded in the database to the advertisement providing apparatus 100, or provides an advertisement matched with the winning ranking that is loaded from the database to the advertisement providing apparatus 100.

The advertisement providing server unit 200 may provide an arbitrary advertisement regardless of the winning ranking as described above, may store advertisements different from each other resulting from the winning rankings and provide an advertisement corresponding to each of the winning rankings received, and may create and provide an advertisement by varying the numbers of objects (a person, animal, car, and the like) inserted in the advertisement with regard to the same advertisement. When the random advertisement is provided regardless of the winning rankings, it is preferable that the advertisement providing apparatus 100 be configured so as to regenerate and display advertisements resulting from the winning rankings by varying the number of objects directly inserted in the advertisement using the provided advertisement.

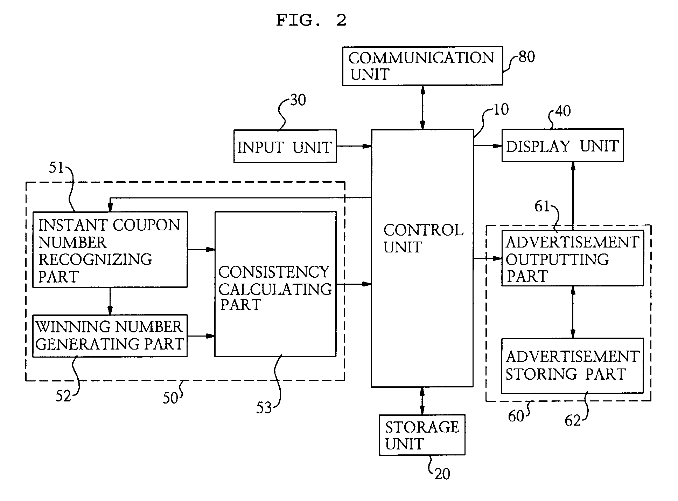

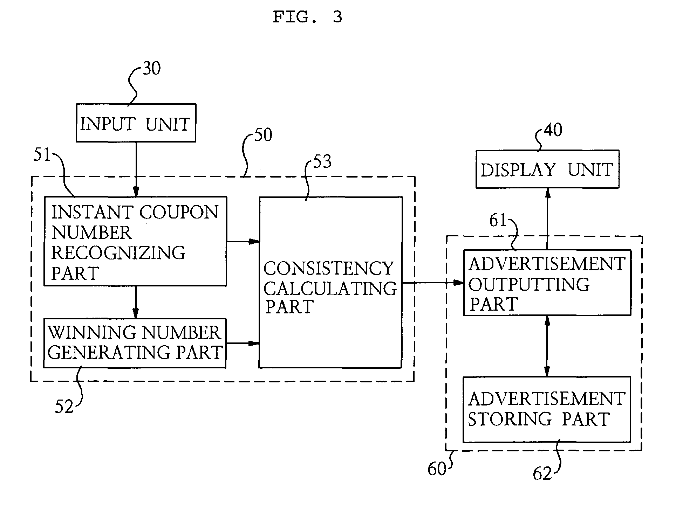

FIG. 2 is a view showing the configuration of an apparatus for providing an advertisement using an instant coupon according to a second exemplary embodiment of the present invention, and FIG. 3 is a view showing the configuration of an apparatus for providing an advertisement using an instant coupon according to a third exemplary embodiment of the present invention. Referring to FIGS. 2 and 3, the configurations which perform the same operation will be described only once.

First, the configuration of the second exemplary embodiment will be described with reference to FIG. 2. An apparatus for providing an advertisement according to the present invention includes: a control unit 10; a storage unit 20; an input unit 30; a display unit 40; a winning confirmation unit 50; and an advertisement providing unit 60.

The control unit 10 functions to control an overall operation of the apparatus for providing the advertisement.

The storage unit 20 includes: a program area configured to store a control program for controlling an overall operation of the advertisement providing apparatus 100; a temporary area configured to temporarily store data generated during executing the program; and a data area configured to store application data generated by various parameters and users and application installation data for providing an operation of the advertisement providing apparatus 100 according to the present invention. When the present invention is configured for exclusive use of the advertisement providing apparatus 100 using the instant coupon, the control program corresponding to the application installation data may be constituted in the control program area.

The input unit 30 may be a key pad including various keys capable of inputting numbers and letters or may be a touch pad outputting coordinate data of a position corresponding to the display unit which has been touched. When instant coupon number information printed on the coupon according to the present invention is printed in a number form, the input unit 30 receives the instant coupon numbers inputted by the user and outputs to the control unit 10.

The display unit 40 displays information on various operation conditions of the advertisement providing apparatus 100 and also displays advertisement data inputted and received by control of the control unit 10.

The winning confirmation unit 50 includes an instant coupon number recognizing part 51, a winning number generating part 52, and a consistency calculating part 53, recognizes instant coupon numbers of an instant coupon, and outputs winning rankings after confirming whether or not the coupon user has won a prize by comparing the instant coupon numbers with the winning numbers.

Specifically, the instant coupon number recognizing part 51 includes a camera, scanner or the like, and recognizes and outputs instant coupon information printed on the instant coupon. The instant coupon information may be instant coupon numbers or a quick response (QR) code in which an instant coupon number is encrypted.

The winning number generating part 52 may be configured such that it pre-stores the winning numbers, and the winning numbers are outputted to the consistency calculating part 53 when the instant coupon numbers are inputted from the instant coupon number recognizing part 51, or the winning number generating part may be configured so that the winning group numbers of a corresponding group is outputted to the consistency calculating part 53 as winning numbers by determining a winning group of winning reference numbers based on the coupon numbers of the instant coupon when the winning number generating part includes: winning reference numbers, each of which is composed of five groups, each of which is composed of four numbers; and coupon numbers, each of which is composed of five rows, each of which is composed of four numbers. That is, in the latter case, by including the winning reference numbers and the coupon numbers having information on the winning group of the winning reference numbers in the winning number generating part, the winning number generating part 52 determines the winning group based on the coupon numbers in reverse, and generates numbers of the winning group as the winning numbers, thereby enabling the winning group to be outputted. When the winning group is formed of five groups, the winning group will be a remainder (except for 0) obtained by dividing a sum of numbers in a first row of the coupon number by 6 (%6). For example, when the four numbers in the first row are 1, 2, 3 and 4, a sum thereof becomes 10, and a remainder obtained by dividing the sum by 6 is 4, and accordingly, the number of a fourth group of the winning reference number will be a winning number. In addition to this, various methods of designating the group may be applied.

The consistency calculating part 53 compares the instant coupon numbers inputted from the instant coupon number recognizing unit 51 with the winning numbers outputted from the winning number generating part 52 to calculate consistency therebetween, and outputs the winning rankings resulting from the consistency to the control unit 10.

The advertisement providing unit 60 includes: an advertisement storing part 62 for storing various kinds of advertisement data matched with the individual winning rankings; and an advertisement outputting part 61 for receiving the winning rankings outputted from the consistency calculating part 53 and inputted through the control unit 10 and outputting advertisement data corresponding to each of the winning rankings to be displayed on the display unit 40.

In the case of the third exemplary embodiment which does not include the control unit 10 and the like, the consistency calculating part 53 of the winning confirmation unit 50 is configured so that the winning rankings are immediately outputted to the advertisement outputting part 61 of the advertisement providing unit 60, and the advertisement outputting part 61 of the advertisement providing unit 60 enables the advertisement data corresponding to each of the winning rankings to be displayed on the display unit 40. At this time, the display unit 40 is operated by direct control of the advertisement outputting part 61 rather than being operated by control of the control unit 10.

Furthermore, the input unit 30 should be configured so that a signal of a winning confirmation request and recognition request and the like from the user is immediately outputted to the instant coupon number recognizing part 51.

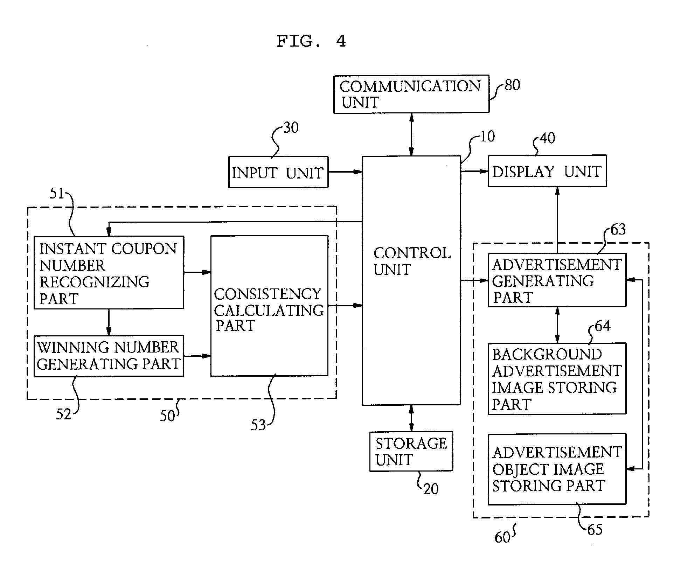

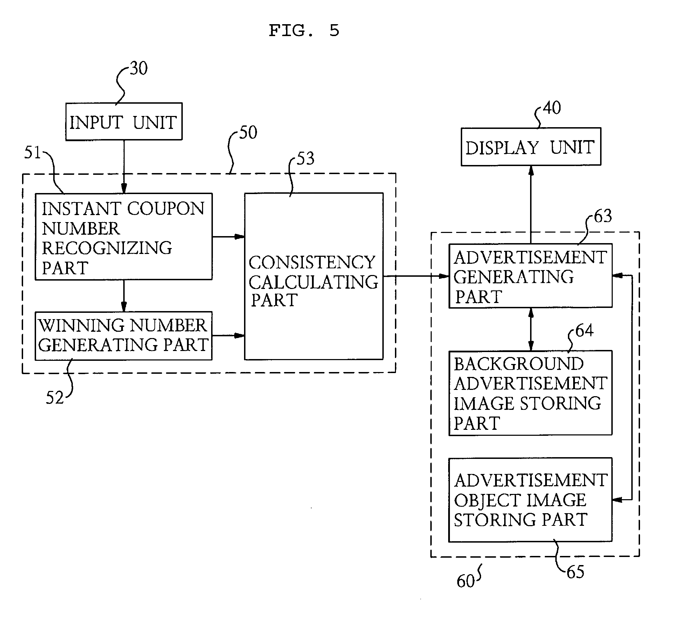

FIG. 4 is a view showing the configuration of an apparatus for providing an advertisement using an instant coupon according to a fourth exemplary embodiment of the present invention, and FIG. 5 is a view showing the configuration of an apparatus for providing an advertisement using an instant coupon according to a fifth exemplary embodiment of the present invention. Like FIGS. 2 and 3, FIGS. 4 and 5 show the exemplary embodiments divided according to whether or not the control unit 10 and the like are present, and FIGS. 4 and 5, and FIGS. 2 and 3 show the exemplary embodiments divided according to a configuration of the advertisement providing unit 60.

Accordingly, only the configurations of the advertisement providing unit 60 according to the fourth and fifth exemplary embodiments will be hereinafter described.

The advertisement providing unit 60 according to the fourth and fifth exemplary embodiments includes: a background advertisement image storing part 64 for storing background images corresponding to an advertisement; an advertisement object image storing part 65 for storing various object images and defining the number and kind of advertisement objects corresponding to the individual winning rankings; and an advertisement generating part 63 for loading advertisement background image from the background advertisement image storing part 64 at the time of inputting the winning rankings outputted from the consistency calculating part 53, determining the kind and number of objects corresponding to each of the winning rankings, loading the determined number and corresponding kind of objects, and composing the loaded objects with the advertisement background images, thereby outputting the advertisement.

Furthermore, the advertisement providing apparatus 100 according to the first exemplary embodiment of the present invention includes the control unit 10, the storage unit 20, the input unit 30, the display unit 40 and the winning confirmation unit 50 to be identical to the second to fifth exemplary embodiments, but does not include the advertisement providing unit 60, and in place of the advertisement providing unit, the advertisement providing apparatus must include a communication unit 80 connected to a wire and wireless data communication network 150 to carry out data communication.

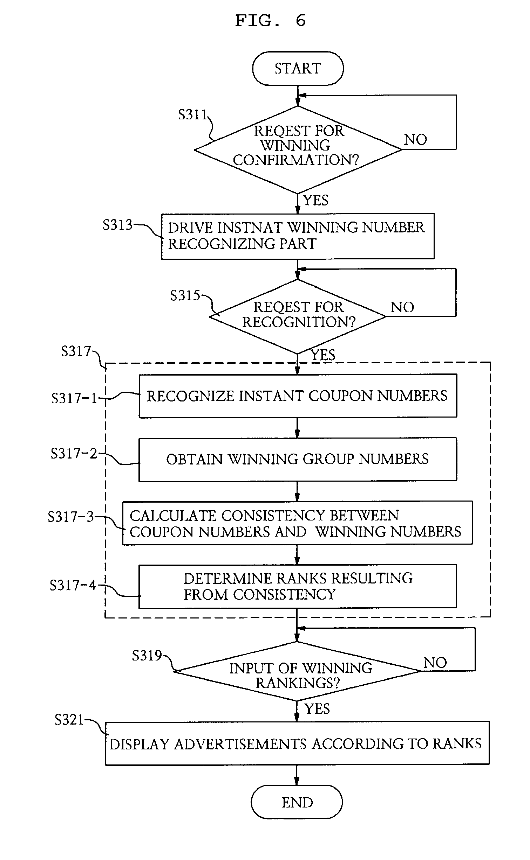

FIG. 6 is a flow chart showing a method for providing an advertisement using an instant coupon according to the present invention. The method will be hereinafter described with reference to FIGS. 2, 4 and 6 showing the configurations including the control unit.

First, the control unit 10 of the advertisement providing apparatus 100 checks whether or not a signal for a winning confirmation request is inputted through the input unit 30 (S311).

The control unit 10 drives the instant coupon number recognizing part 51 when the signal for the winning confirmation request is inputted (S313), and checks through the input unit 30 whether or not a request for recognition occurs (S315).

When the request for recognition has occurred, the control unit 10 recognizes instant coupon numbers of the coupon through the winning confirmation unit 50, and thereafter compares the coupon number and the winning number, thereby confirming prize winning (S317).

Specifically, the control unit 10 captures or scans instant coupon information through the instant coupon number recognizing part 51, and thereafter, recognizes the instant coupon numbers through letter recognition or reversely encrypted QR codes (S317-1).

The recognized instant coupon numbers are outputted to the winning number generating part 52 and the consistency calculating part 53.

The winning number generating unit 52 outputs the winning numbers, which have been stored in advance, to the consistency calculating part 53 when the recognized instant coupon number is inputted, or creates the winning numbers from the instant coupon number and outputs the winning numbers to the consistency calculating part 53 ((S317-2).

When the winning numbers and the instant coupon numbers are inputted, the consistency calculating part 53 calculates consistency between the winning numbers and the instant coupon numbers (S317-3), and thereafter, outputs the winning rankings to the control unit 10 by determining the winning rankings according to the consistency (S317-4).

The control unit 10 checks whether or not the winning rankings are inputted from the consistency calculating part 53 after the request for recognition of the instant coupon numbers (S319), and enables the advertisement corresponding to the winning ranking to be displayed on the display unit 40 when the winning ranking is inputted from the consistency calculating part 53 (S321).

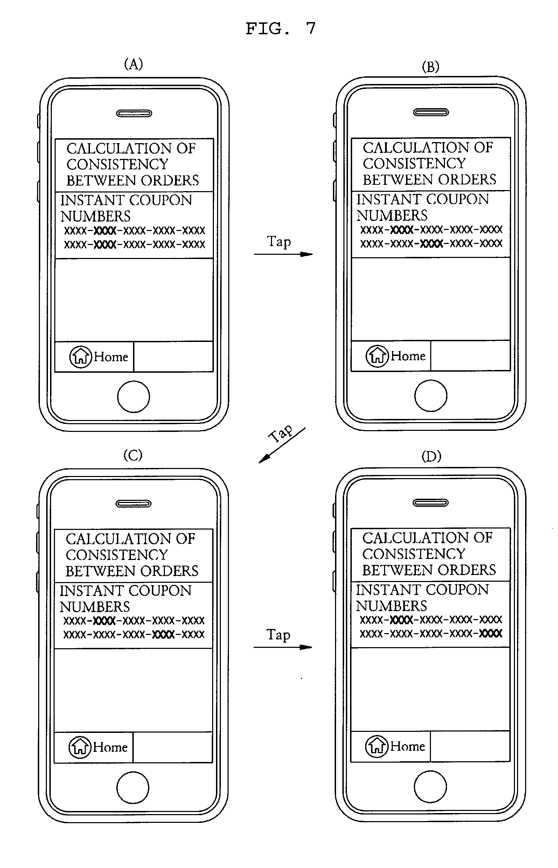

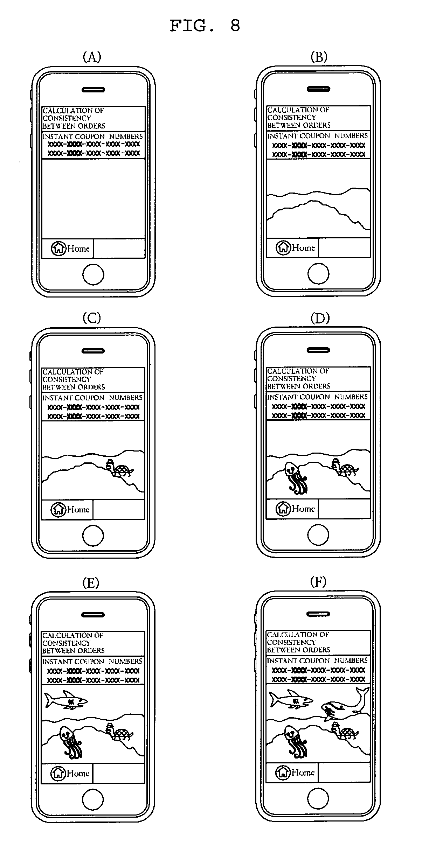

FIG. 7 is a view for explaining one example in which winning rankings are determined by calculating consistency of instant coupon numbers according to the present invention and FIG. 8 is a view showing one example in which an advertisement is indicated according to each of winning rankings resulting from the calculation of consistency of the instant coupon numbers according to the present invention. Each of the instant coupon numbers is composed of winning reference numbers and coupon numbers, and the winning numbers included in instant coupon information are numbers that fall in one group among winning reference number groups, each including a plurality of groups, each of which is composed of plurality of numbers, and each of the coupon numbers included in the instant coupon information includes information on the winning group corresponding to the winning numbers among the groups, has digits of the same number as that of digits of the winning group of the winning numbers, and is composed of rows of the same number as that of rows of the winning group.

In this case, the control unit 10 recognizes the instant coupon numbers in the step of (S317-1, and obtains winning numbers (or winning group numbers) of a winning group, thereby enabling the winning numbers to be displayed as shown in (A) of FIG. 7, and the control unit may determine the winning rankings according to whether a winning group number of upper winning confirmation numbers, namely, a number which is consistent with any of the winning group numbers of the winning numbers is present in how many rows of the coupon numbers while proceeding with the steps of (B), (C), and (D) circularly whenever a touch signal or a random functional key signal is inputted from the input unit 30.

As another method, the control unit 10 may be configured so that the advertisement generating part 63 generates: a blank image as (A); an advertisement background image as (B); advertisement data as (C) in which one advertisement object (a turtle) image is combined with the advertisement background image (under the sea); advertisement data as (D) in which two advertisement object (a turtle and jellyfish) images are combined with the same advertisement background image; advertisement data as (E) in which three advertisement object (a turtle, jellyfish and shark) images are combined with the same advertisement background image; and advertisement data as (F) in which four advertisement object (a turtle, jellyfish, shark and whale) images are combined with the same advertisement background image, for each of winning rankings according to the consistency of numbers arranged in a row position of the coupon number which is identical to a position of a group where the winning numbers of the winning confirmation numbers are positioned, and the images or advertisement data are displayed through the display unit 40.

As a further method, the control unit 10 enables the same advertisement according to the winning ranking to be displayed repeatedly as much as a number corresponding to each of the winning rankings, and thereafter, a free gift is provided.

Meanwhile, those skilled in the art will appreciate that the present invention is not limited to the above-described typical embodiments, and that various improvements, modifications, additions and substitutions are possible, without departing from the scope and spirit of the invention as disclosed in the accompanying claims. It should be understood that as long as the implementation of improvements, modifications, additions and substitutions fall within the scope of the accompanying claims, the spirit thereof belongs to the scope of the present invention.

**[Description of the Reference Numerals in the Drawings]**

| | | | |
|---|---|---|---|
| 10: | Control unit | 20: | Storage unit |
| 30: | Input unit | 40: | Display unit |
| 50 : | Winning Confirmation unit | | |
| 51: | Instant coupon number recognizing part | | |
| 52: | Winning number generating part | | |
| 53: | Consistency calculating part | | |
| 60: | Advertisement providing unit | | |
| 61: | Advertisement outputting part | | |
| 62: | Advertisement storing unit | | |
| 63: | Advertisement generating part | | |
| 64: | Background advertisement image storing part | | |
| 65: | Advertisement object image storing part | | |
| 80: | Communication unit | | |
| 100: | Advertisement providing apparatus | | |
| 101: | Advertisement providing terminal | | |
| 150: | Wire and wireless data communication network | | |
| 160: | Local network | | |
| 200: | Advertisement providing server unit | | |
| 210: | Advertisement server | | |
| 220: | Web server | | |

## Claims

1. An apparatus for providing an advertisement using an instant coupon, the apparatus comprising: a winning confirmation unit for detecting coupon numbers and winning numbers from instant coupon information included in a coupon, calculating a winning group of the winning numbers based on the coupon numbers, calculating consistency between winning group numbers of the winning group and the coupon numbers, and determining and outputting winning rankings resulting from the consistency, wherein the instant coupon information includes: the winner numbers that fall in one group among winning reference number groups, each of which includes a plurality of groups, each of which is composed of plurality of numbers; and the coupon numbers, each of which includes information on the winning group corresponding to the winning numbers among the groups, has digits of the same number as that of digits of the winning group of the winning numbers, and is composed of rows of the same number as that of rows of the winning group; a display unit for displaying the advertisement; an advertisement providing unit for enabling the advertisement to be displayed on the display unit to correspond to each of the winning rankings; and a control unit for controlling the advertisement providing unit to enable the advertisement corresponding to each of the winning rankings to be displayed on the display unit.

2. The apparatus of claim 1, wherein the winning confirmation unit comprises: an instant coupon number recognizing part for recognizing the instant coupon information from the coupon and detecting and outputting the winning numbers and coupon numbers from the instant coupon information; a winning number generating part for outputting winning group numbers of each of the corresponding winning groups by receiving information on the input coupon numbers and calculating the winning groups; and a consistency calculating part for receiving information on the coupon numbers and the winning group numbers, calculating consistency between the coupon numbers and the winning group numbers, and thereafter, enabling the winning rankings resulting from the consistency to be outputted to the control unit.

3. The apparatus of claim 1 or 2, wherein a number of the winning groups is four, and each of the winning groups is composed of four digits.

4. The apparatus of claim 1 or 2, wherein the winning confirmation unit determines the winning rankings according to whether numbers which are consistent with the winning group numbers of the winning numbers are present in how many row of the coupon numbers.

5. The apparatus of claim 1 or 2, wherein the winning confirmation unit determines the winning rankings according to the number of consistent digits and the consistency of orders among digits of the winning group numbers of the winning numbers and digits of individual rows of the coupon numbers.

6. The apparatus of claim 1, wherein the advertisement providing unit comprises: an advertisement storing part for storing at least one advertisement; and an advertisement outputting part for repeatedly outputting a random advertisement among the advertisements stored in the advertisement storing part through the display unit to correspond to each of the winning rankings.

7. The apparatus of claim 1, wherein the advertisement providing unit comprises: a background advertisement image storing part for storing at least one background image; an advertisement object image storing part for storing advertisement object images more than a number of advertisement objects corresponding to each of the winning rankings; and an advertisement generating part for loading a random background advertisement image at the time of the winning rankings being determined and combining the advertisement object images corresponding to each of the winning rankings with the background advertisement images loaded from the advertisement object image storing unit to generates the advertisement.

8. An apparatus for providing an advertisement using an instant coupon, the apparatus comprising: a display unit for displaying an advertisement; a winning confirmation unit for detecting coupon numbers and winning numbers from instant coupon information included in a coupon, calculating a winning groups of the winning numbers based on the coupon numbers, calculating consistency between winning group numbers of the winning group and the coupon numbers, and thereafter, determining and outputting winning rankings resulting from the consistency, wherein the instant coupon information includes the winner numbers that fall in one group among winning reference number groups, each of which includes a plurality of groups, each of which is composed of plurality of numbers; and the coupon numbers, each of which includes information on the winning group corresponding to the winning numbers among the groups, has digits of the same number as that of digits of the winning group of the winning numbers, and is composed of rows of the same number as that of rows of the winning group; and an advertisement providing unit for receiving information on the input winning rankings and enabling the advertisement corresponding to each of the winning rankings to be output through the display unit.

9. The apparatus of claim 8, wherein the winning confirmation unit comprises: an instant coupon number recognizing part for recognizing the instant coupon information from the coupon and detecting and outputting the winning numbers and coupon numbers from the instant coupon information; a winning number generating part for receiving information on the input coupon numbers and generating the winning numbers; a consistency calculating part for comparing the generated winning numbers and the coupon numbers to calculate consistency therebetween, determining the winning rankings according to the consistency, and enabling the winning rankings to be outputted to the advertisement providing unit.

10. The apparatus of claim 9, wherein the advertisement providing unit comprises: an advertisement storing part for storing various advertisements having winning ranking information; and an advertisement outputting part for loading an advertisement having the same winning ranking information as each of the winning rankings from the advertisement storing part and enabling the advertisement to be displayed through the display unit.

11. The apparatus of claim 8, wherein the advertisement providing unit comprises: a background advertisement image storing part for storing background images of the advertisement; an advertisement object image storing part for storing object images for various objects to be combined with the background images of the advertisements; and an advertisement generating part for receiving information on the input winning rankings, loading object images and advertisement background images in numbers corresponding to each of the winning rankings, and combining the advertisement background images with the object images to generate an advertisement, thereby enabling the advertisements to be displayed on the display unit.

12. A method for providing an advertisement using an instant coupon, the method comprising: a preparation process of driving an instant winning number recognizing unit according the request for confirmation of prize winning of a coupon; a recognition process of recognizing instant coupon numbers including: winner numbers that fall in one group among winning reference number groups, each of which includes a plurality of groups, each of which is composed of plurality of numbers; and coupon numbers, each of which includes information on the winning group corresponding to the winning numbers among the groups, has digits of the same number as that of digits of the winning group of the winning numbers, and is composed of rows of the same number as that of rows of the winning group; a winning number obtaining process of obtaining winning numbers, which are winning group numbers, from the recognized instant coupon numbers; a winning ranking determining process of determining winning rankings corresponding to consistency calculated between the winning numbers and the coupon numbers; and an advertisement providing process of displaying an advertisement according to each of the winning rankings on a display unit.

13. The method of 12, wherein the advertisement providing process comprises: an advertisement loading step of loading a random advertisement at the time of the winning rankings being determined; and an advertisement providing step of repeatedly displaying the loaded advertisement to correspond to each of the winning rankings on the display unit.

14. The method of 12, wherein the advertisement providing process is **characterized by** loading the advertisement corresponding to each of the winning rankings from the advertisements stored to be mapped to the winning rankings and displaying the advertisements.

15. The method of 12, wherein the advertisement providing process comprises: an advertisement background image loading step of loading random advertisement background images at the time of the winning rankings being determined; an advertisement object image loading step of loading advertisement object images corresponding to a number of advertisement object images of each of the winning rankings; an advertisement generating step of generating an advertisement by combining the loaded advertisement object images with the loaded advertisement background images; and an advertisement providing step of displaying the generated advertisement on the display unit.
